(19) Europäisches Patentamt
European Patent Office
Office européen des brevets

(11) **EP 3 091 698 A1**

(12) **EUROPEAN PATENT APPLICATION**

(43) Date of publication:
**09.11.2016 Bulletin 2016/45**

(51) Int Cl.:
***H04L 12/751*** (2013.01)      ***H04Q 11/00*** (2006.01)

(21) Application number: **15305706.2**

(22) Date of filing: **07.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **MESTRE ADROVER, Miquel Angel**
 **91620 NOZAY (FR)**
• **JENNEVE, Philippe**
 **91620 NOZAY (FR)**
• **MOREA, Annalisa**
 **20871 VIMERCATE, MB (IT)**

(74) Representative: **Novagraaf Technologies**
**Bâtiment O2**
**2, rue Sarah Bernhardt**
**CS90017**
**92665 Asnières-sur-Seine Cedex (FR)**

(54) **METHOD FOR OPTIMIZING AN OPTICAL NETWORK BY ANALYSIS OF STATISTICAL VALUES ASSOCIATED TO PARAMETERS**

(57)    A method is intended for optimizing an optical network (1) comprising a control plane (2) and nodes ($3_1$-$3_4$) coupled to this control plane (2) and therebetween by means of transmission links. This method comprises i) determining at least one parameter of end-to-end transmission links of this network (1), then providing each determined parameter to the control plane (2), ii) estimating parameters of unknown intermediate transmission links of this network (1) from these determined parameters, iii) producing at least one statistical value of each determined parameter and/or at least one statistical value of each estimated parameter and associating at least one trust coefficient for at least one of these parameters, and iv) analysing each produced statistical value, each associated trust coefficient and these determined or estimated parameters to perform at least one optimization of the network (1).

FIG.1

**Description**

**Field of the Invention**

The present invention relates to optical networks, and more precisely to the optimization of such optical networks.

**Background**

As it is known by those skilled in the art, in most of existing optical networks there is a lack of knowledge of real link/element parameters and characteristics that leads to a non-negligible performance uncertainty. Therefore product suppliers and system operators must take margins to guarantee a certain transmission performance.

There are mainly two families of margins: design margins and system margins. The design margins are related to uncertainties of reach calculation tools. The lack of knowledge of exact noise factors (NF) in amplifiers in a link and/or of exact dispersion map leads to uncertainties on some parameters, such as optical signal to noise ratio (OSNR) and accumulated chromatic dispersion (CD), which are key-parameters of the models used to calculate the performance and reach of a transmission signal. So, the trend is to design a network based on worst case estimation, which usually leads to plenty of extra-margins.

The system margins account for possible link/component impairments and line degradations. They may notably take into account parameters such as transponder aging, fiber aging, polarization dependent loss (PDL), polarization mode dispersion (PMD), and nonlinear effects. Some of these parameters are used as inputs in design network tools, however they are generally poorly estimated, which introduces extra-margins due to uncertainties.

Furthermore, due to the ever increasing demand of network capacity, spectrum resources are precious. Hence a huge effort is done for increasing spectral efficiency, for instance by reducing channel spacing. But this induces important filtering impairments that also introduce extra-margins due to uncertainties. In addition, when a tight filtering is performed it appears a lack of knowledge of the spectral transfer function of the filter (notably bandwidth, order and roll-off) and of the frequency misalignment between laser source and the filter central frequency, due to laser and filter uncertainties induced by fabrication and by aging of the components. This may also introduce extra-margins due to uncertainties.

More, no solution has been proposed to cognitively adapt the margins as a function of the uncertainty of link impairments.

So, it appears that to optimize network performance margins need to be reduced, which requires taking into account as many parameters as possible and an improvement of the knowledge of these parameters, but also a proper monitoring of the parameters with a maximum possible precision.

Some optical parameter monitoring have been proposed, but mainly for ensuring a well performance of optical components (hence of the optical network) or discovering failures, but not for updating parameters to optimize network design, routing and capacity. Moreover, optical performance monitoring (OPM) can be performed by using taps that take part of the signal at strategic points in the network, and extra photodiodes or other instruments to measure certain parameters (typically OSNR, CD, and more exotically PMD and PDL). But this is somehow intrusive and requires extra elements in the network that increases costs. Furthermore, these parameter measurements have some uncertainties because only a small portion of the signal is taken.

So there is no non-intrusive technique capable of estimating the most relevant physical parameters of all intermediate links of an optical network.

**Summary**

So an object of this invention is to improve the situation.

In an embodiment, a method is intended for optimizing an optical network comprising a control plane and nodes coupled to this control plane and therebetween by means of transmission links, and comprises:

- i) determining at least one parameter of end-to-end transmission links of this network, then providing each determined parameter to the control plane,
- ii) estimating parameters of unknown intermediate transmission links of this network from these determined parameters,
- iii) producing at least one statistical value of each determined parameter and/or at least one statistical value of each estimated parameter, and associating at least one trust coefficient for at least one of these parameters, and
- iv) analysing each produced statistical value, each associated trust coefficient and these determined or estimated parameters to perform at least one optimization of the network.

This allows a complete knowledge of the whole network, which can be used notably to improve performance estimation and design, and to reduce margins related to parameter uncertainties.

The method may include additional characteristics considered separately or combined, and notably:

- each network optimization may be chosen from a group comprising a margin calculation, a transmission link design, a best routing and a failure detection;
- each determined or estimated parameters may be chosen from a group comprising an amplitude of a filtering transfer function (FTF), a phase of a filtering transfer function, an optical signal to noise ratio (OSNR), a chromatic dispersion (CD), a polarization dependent loss (PDL), a polarization mode dispersion (PMD) and a noise factor (NF), for instance;
- in the case where a statistical value of a parameter has been already produced for this parameter before it is determined or estimated once again, one updates said statistical value by using a last determination or estimation of its parameter;

- the trust coefficient may be a function of a last update time and/or current and historic statistical values and/or a confidence level/interval;
- one may further associate a confidence level/interval and/or a last update time to at least of one the parameters;
- each statistical value may be chosen from a group comprising at least a mean value, a variance and a standard deviation.

In another embodiment, a computer program product comprises a set of instructions arranged, when it is executed by processing means, for performing the method according to one of the preceding claims to optimize an optical network comprising a control plane and nodes coupled to this control plane and therebetween by means of transmission links.

In another embodiment, an apparatus is intended for optimizing an optical network comprising a control plane and nodes coupled to this control plane and therebetween by means of transmission links, and is arranged for i) determining at least one parameter of end-to-end transmission links of the network, then providing each determined parameter to the control plane, ii) estimating parameters of unknown intermediate transmission links of the network from each determined parameter, iii) producing at least one statistical value of each determined parameter and/or at least one statistical value of each estimated parameter and associating at least one trust coefficient for at least one of these parameters, and iv) analysing each produced statistical value, each associated trust coefficient and these determined or estimated parameters to perform at least one optimization of the network.

**Brief Description of the Figures**

Some embodiments of an optimization method in accordance with embodiments of the present invention are now described, by way of examples only, and with reference to the accompanying drawings, in which:

- Figure 1 schematically and functionally illustrates an example of embodiment of an optical network,
- Figure 2 schematically illustrates an example of primary table comprising parameters associated to the different transmission links established between the nodes of the optical network of Figure 1,
- Figure 3 schematically illustrates an example of a part of secondary table comprising statistical values and other elements relative to parameter $P_{12}$ comprised into the primary table of Figure 2, and
- Figure 4 schematically illustrates an example of algorithm implementing an optimization method according to the invention.

**Description of Embodiments**

Hereafter is notably disclosed a method, and an associated apparatus, intended for optimizing an optical network 1 comprising a control plane 2 and nodes $3_j$.

For instance, a node $3_j$ is arranged for receiving and transmitting optical signals on optical waveguides.

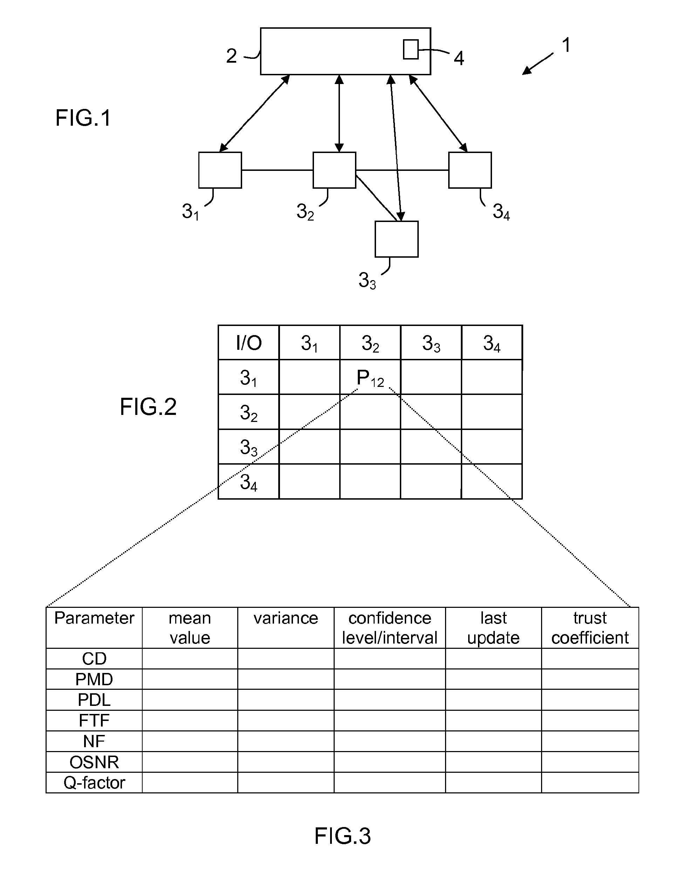

A very simple and non-limiting example of optical network 1 is illustrated in Figure 1. In this example, the optical network 1 comprises four nodes $3_1$ to $3_4$ (j = 1 to 4) that are not only coupled to the control plane 2, but also therebetween by means of transmission links. For instance, in this optical network 1 there is an end-to-end transmission link established between nodes $3_1$ and $3_4$, via node $3_2$, and an end-to-end transmission link established between nodes $3_1$ and $3_3$, via node $3_2$.

The number of nodes $3_j$ in the illustrated example is only an example intended to ease the understanding of the invention by means of a very simple example. But the optical network 1 to be optimized may comprise any number of nodes, as soon as this number is at least equal to two.

The method, according to the invention, comprises four steps i) to iv) that may be implemented by network elements and a computer program product comprising a set of instructions that may be executed by processing means.

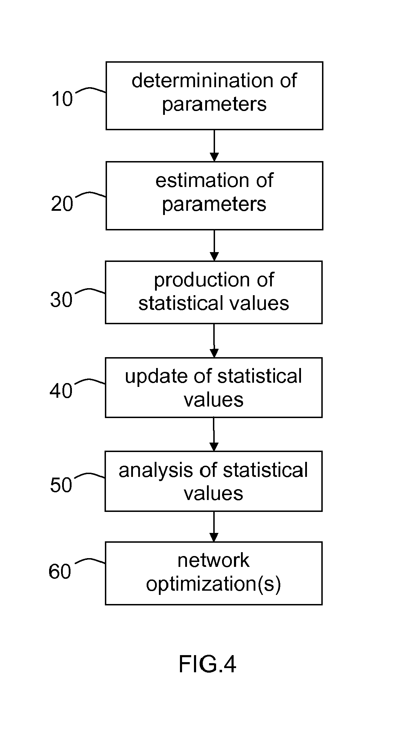

This optimization method is described below with reference to the example of algorithm schematically illustrated in Figure 4.

During the first step i) one determines at least one parameter of end-to-end transmission links of the network 1, then one provides each determined parameter to the control plane 2. This first step i) is represented in Figure 4 by the sub step 10.

For instance, a parameter to be determined may be an amplitude of a filtering transfer function (FTF), an optical signal to noise ratio (OSNR), a chromatic dispersion (CD), a polarization dependent loss (PDL), a polarization mode dispersion (PMD), or a noise factor (NF). A filtering transfer function is a mathematical representation of the channel response of a system (such as a transmission link or an intermediate link) in the frequency domain, and its amplitude or phase is representative of a filtering effect.

The parameter determination may be performed into at least one of the network nodes $3_j$ and/or into the control plane 2. In the case where a parameter is determined into a node $3_j$, it may be transmitted to the control plane 2 by an OSPF-TE ("Open Shortest Path First - Traffic Engineering") like protocol, for instance. In the case where a parameter is determined into the control plane 2, the latter (2) must receive information relative to this parameter from each concerned node $3_j$, and then must use this information to determine this parameter. Each information may be transmitted to the control plane 2 by an OSPF-TE like protocol, for instance.

Coherent receivers, that may be comprised, for instance, into the nodes 3j have the ability of capturing the whole complex field of a transmitted signal, and of performing a digital signal processing (DSP) to recover the signals (somehow performing the inverse of the channel transfer function). So, this allows non-intrusive multi-impairment optical performance monitoring (OPM). But, existing monitoring devices could also be used to complete the set of information monitoring. It is important to note that the invention does not concern only nodes 3j comprising coherent receiver(s).

For instance, by using simple analysis outputs from DSP functions, such as CD compensation or polarization demultiplexing and equalization filter, one can extract parameters such as CD, OSNR, PMD and PDL of a transmission link. Other parameters, such as the filtering transfer function (FTF) can also be obtained by DSP using various methodologies. For instance, FTF may be estimated from the equalizer coefficients, or by calculating the power spectral density function.

For instance, the determined parameters $P_{jj'}$ (with j' ≠ j) may be stored into a primary table in correspondence with couples of identifers of the concerned nodes $(3_j, 3_{j'})$. This primary table may be stored into a memory means (possibly of a software type) of a network element of the control plane 2 that receives the parameters and/or the parameter information from the nodes $3_j$. For instance, this network element may be a transmitter or a receiver or an apparatus 4 of the control plane 2 that implements at least partly the method. But it could be also stored into a memory means of a computer that is coupled to this network element at the control plane.

If one refers to Figure 1, parameter $P_{14}$ is associated to the end-to-end transmission link established between nodes $3_1$ and $3_4$, via node $3_2$, parameter $P_{13}$ is associated to the end-to-end transmission link established between nodes $3_1$ and $3_3$, via node $3_2$, and parameter $P_{23}$ is associated to the end-to-end transmission link established between nodes $3_2$ and $3_3$.

A non-limiting example of primary table, comprising parameters associated to the different transmission links established between the nodes 3j of the optical network 1 of Figure 1, is schematically illustrated in Figure 2.

During the second step ii) one estimates parameters of unknown intermediate transmission links of the network 1 from the parameters determined during the first step i). One means here by "unknown" all possible intermediate transmission links participating to any end-to-end transmission link of the network 1, being or not being used, and from which one does not have direct access to the parameters (and therefore those parameters are unknown). This second step ii) is represented in Figure 4 by the sub step 20.

It is important to note that some of these parameters may be estimated by means of known parameter(s) concerning other transmission link(s) than the one which they are associated to. A lower trust coefficient is preferably associated to such transmission links, because the values are not issued by a direct measure.

The parameter estimation can be performed, for instance, by a network element of the control plane 2 that receives the parameters and/or the parameter information from the nodes $3_j$, or by a computer that is coupled to this network element. This network element may be the above mentioned apparatus 4 of the control plane 2 that implements at least partly the method.

For instance, the estimated parameters $P_{jj'}$ (with j' ≠ j) may be stored into the above mentioned primary table in correspondence with couples of identifers of the concerned nodes $(3_j, 3_{j'})$.

Thanks to the linear accumulation nature of most of the parameters, several techniques may be used, alone or in combination, to estimate parameters concerning intermediate transmission links.

For instance, one may estimate the filtering transfer function (FTF) of an intermediate transmission links by performing the inverse of the known part of the FTF in the frequency domain. Indeed, the FTF of an end-to-end trans-

mission link between nodes $3_1$ and $3_3$ can be defined in the frequency domain as the multiplication of transfer functions of intermediate transmission links between nodes $3_1$ and $3_2$ and between nodes $3_2$ and $3_3$:

$$FTF_{13}(f) = FTF_{12}(f)*FTF_{23}(f) \quad [\text{equation 1}].$$

So, if one knows $FTF_{23}(f)$ and $FTF_{13}(f)$:

$$FTF_{12}(f) = FTF_{13}(f)*[FTF_{23}(f)]^{-1} \quad [\text{equation 2}].$$

Instead of estimating the filtering transfer function of an intermediate transmission link, one may estimate a set of sub-parameters, such as the effective bandwidth and the effective filter order, for instance.

Also for instance, the accumulated chromatic dispersion (or accumulated CD, hereafter referenced ACD), which can reveal the dispersion map of an end-to-end transmission link, is the sum of $ACD_{jj'}$ of all its intermediate transmission links: $ACD_{13} = ACD_{12} + ACD_{23}$. So, $ACD_{12} = ACD_{13} - ACD_{23}$.

Also for instance, the differential group delay (leading to PMD) and PDL of an end-to-end transmission link are the sum of the contribution of all their respective intermediate transmission links. So, one may estimate the differential group delay and thus the PMD and PDL of an intermediate transmission link from respectively the differential group delay and PDL of its end-to-end transmission link.

In a variant the above mentioned parameters may be estimated from the estimated multiple input multiple output (MIMO) channel matrix H (i.e. the polarisation demultiplexer matrix - this matrix is the inverse of the channel tranfer function when using polarization division multiplexed signals). To this effect, one may diagonalize the latter and then perform the same operations in the frequency domain as in equations 1 and 2 to extract the MIMO channel matrix of an intermediate transmission link, and then estimating all necessary parameters from this extracted MIMO channel matrix.

Also for instance, the equivalent noise factor (NF) or equivalent temperature, together with fiber link loss and power variations, that lead to OSNR degradation and nonlinear threshold characterization, may also be extracted using accumulative and Friis laws.

It is important to note that other parameters than those above mentioned could be also estimated.

During the third step iii) one produces at least one statistical value of each determined parameter and/or at least one statistical value of each estimated parameter, and one associates at least one trust coefficient for at least one of these parameters. This third step iii) is represented in Figure 4 by the sub step 30.

The trust coefficient is a value (or coefficient) that defines the reliability of the statistics of a given parameter $P_i$, and therefore the confidence we have with this monitored parameter $P_i$ (and which defines the margin associated to). It may be a function of different measurement in time of the parameter under concern, deduced from the same parameter but somewhere else in the network or an estimation through other kind of parameter(s) of the link. So, it is an indicator of the stability of a transmission link.

For instance, the trust coefficient may be a function of a last update time and/or current and historic statistical values and/or a confidence level/interval.

Here, a confidence level/interval designates both a confidence level and the confidence interval associated to this confidence level. A confidence level is the probability that the value of a parameter lies within a range of values specified by the associated confidence interval. Higher is the confidence level, smaller will be the uncertainty on the measured or estimated parameter.

A current statistical value is calculated using the most recent samples of such a value. The number of most recent samples used for the current statistical value calculation ($N_{curr}$) is smaller than the number of samples used to calculate the historic most recent values ($N_{hist}$): Ncurr < Nhist. So, one may obtain an updated current statistical value of the parameter, and one can detect easily when a change occurs by comparing the historic and current statistical values. A log of statistical values could be also saved to continuously study the tendency of a parameter, which is notably practical for degradation tracking and estimation of future performance.

A last update time is a time information defining the date on which the last update of a parameter has been performed.

These statistical value production and trust coefficient association can be performed, for instance, by the above mentioned network element of the control plane 2, or by a computer that is coupled to this network element. This network element may be the above mentioned apparatus 4 of the control plane 2 that implements at least partly the method.

In the case where a statistical value of a parameter has been already produced for this parameter before it is determined or estimated once again, one may update this statistical value by using a last determination or estimation of its parameter. This option is a part of the third step iii) that is represented in Figure 4 by the sub step 40.

For instance, a statistical value may be a mean value or a variance or else a standard deviation

It is important to note that one may further associate a confidence level/interval and/or a last update time to at least some parameters. This association may be performed into a secondary table, as it is the case in the non-limiting example illustrated in Figure 3.

In addition, performance/reach estimations can be corroborated with real bit error rate (BER) or Q-factor values obtained at the receiver of a node $3_j$ after real transmissions. The Q-factor is a simple conversion of the BER metric. It is commonly used by operators and easier to read thanks to its dB scale and because it increases with the performance (contrary to the BER). Correlations between estimated and real monitored values will be used as inputs to calculate the trust coefficient (the better is the correlation between estimated and monitored values, the higher is the trust coefficient). So, the trust coefficient can define clearly the quality of the knowledge of the link parameters, and can be used when calculating margins and when choosing the best transmission link during the network optimization. All statistics will be used in the next fourth step iv) to optimize networking performance.

For instance, the statistical values and associated elements (such as the trust coefficients and the confidence level/interval), relative to the parameters $P_{jj'}$, may be stored into a secondary table in correspondence with identifers of the concerned parameters $P_{jj'}$.

This secondary table may be stored into a memory means (possibly of a software type) of the above mentioned network element of the control plane 2, or of the above mentioned computer that is coupled to this network element. This network element may be the above mentioned apparatus 4 of the control plane 2 that implements at least partly the method. For instance the primary table and the secondary table may define a database.

A non-limiting example of a part of secondary table, dedicated to parameter $P_{12}$ comprised into the primary table of Figure 2, is schematically illustrated in Figure 3.

During the fourth step iv) one analyses each produced statistical value, each associated trust coefficient and the determined or estimated parameters to perform at least one optimization of the network 1. This fourth step iv) is represented in Figure 4 by the sub steps 50 and 60.

Each network optimization can be performed, for instance, by the above mentioned network element of the control plane 2, or by a computer that is coupled to this network element. This network element may be the above mentioned apparatus 4 of the control plane 2 that implements at least partly the method.

For instance, a network optimization may be a margin calculation, a transmission link design, a best routing, or a failure detection.

Network optimization(s) may, for instance, allow maximizing capacity of the network 1 and minimizing cost of this network 1. But it (they) may also allow improving performance and assist network engineers during link design and routing and during network upgrade.

Indeed, performance and reach estimation tools may use updated data stored into the primary and secondary tables to perform best possible performance and reach estimation. In this case, BER (or Q-factor) values monitored at the receiver of a node $3_j$ are preferably used to corroborate and adjust estimations, which allows updating the trust coefficient in the same time. They serve as inputs to the link design and routing.

Link design tools may use parameter variances to get variances relative to performance and reach estimations that have to be fought with the introduction of margins ensuring a required performance. Usually, margins (m) are introduced to ensure that the estimated Q-factor ($Q_{est}$) plus the Q-factor variation ($\Delta Q$) within a certain confidence interval (e.g. 95% of confidence level) is greater than a required Q-factor ($Q_{req}$) : $Q_{est} + \Delta Q \geq Q_{req}$, with $m = m_{\Delta Q} + m_e > \Delta Q$ (where $m_{\Delta Q}$ is an intrinsic margin associated to $\Delta Q$ and $m_e$ is an extra-margin taken into account to ensure performance in all cases.

Statistics of the parameters (variances and confidence levels/intervals that are continuously determined or estimated) can be used to have the best estimation of $\Delta Q$, and therefore to minimize $m_{\Delta Q}$. In the state of art extra-margins ($m_e$) are taken into account to ensure performance in all cases, while thanks to the invention the trust coefficient of each parameter may be used to establish the amount of extra-margin ($m_e$) required. The better one knows a transmission link, the lower will be the associated extra-margin.

For instance, an uncertainty $\Delta Pi$ relative to a parameter "$P_i$" (calculated by using variance and confidence level/intervals values) will induce a Q-factor variation $\Delta Qi$ (estimated by means of performance estimation tools). Therefore, intrinsic margin $m_{\Delta Q}$ can be calculated as a function of all $\Delta Qi$ coming from the different parameters: $m_{\Delta Q} = f(\Delta Qi) = \sum(\Delta Qi)$, with $i = 1$ to $N$, where $N$ is the number of parameters.

Then, extra-margins $m_e$ can be calculated, for instance, by using typical extra-margin ($m_{e\_typ\_Pi}$ values) weighted with trust coefficients ($c_{t\_Pi}$). Ideally, an extra-margin per parameter ($m_{e\_Pi}$) should be calculated. In this case, one may calculate, for instance:

$$m_e = \sum(m_{e\_typ\_Pi} * (1 - c_{t\_Pi})),$$

with i = 1 to N.

In some optical networks extra-margins $m_e$ are taken into account globally (not per parameter). In this case, the global typical extra-margin $m_{e\_typ}$ can be weighted by a global trust coefficient $c_t$, being a function of particular trust coefficients (from each parameter): $m_e = m_{e\_typ} * (1 - c_t)$, where $c_t = f(c_{t\_Pi})$.

In both examples $c_t = 1$ means an ideal full trust on the statistical values of a parameter, hence no extra-margin is used. On the contrary, $c_t = 0$ means that one cannot trust the statistical values yet (this could happen for instance the day of installation of the network 1, and therefore typical extra-margins must be used to start with). However, the monitoring technique according to the invention leads to a "complete" knowledge of the network 1, hence $c_t$ will approach to 1, which will induce a margin reduction. It is important to note that $c_t$ could take even a negative value if required, in order to further increase margins in the case of extremely bad transmission links or unexpected failures.

When the method is implemented with a continuous monitoring, data contained in the primary and secondary tables may allow to detect failures and/or components degradation. As mentioned before couples of current and historic statistical values associated to a parameter allow fast detection of problems. Furthermore, if at least some (and preferably all) parameters are continuously monitored for each intermediate transmission link, one may rapidly isolate the origin of a failure or degradation, and then act in consequence (rather by changing the concerned network element or recalculating performance, link design and routing). For instance, in the case where a failure has been detected, traffic can be rerouted accordingly. This may occur, for instance, when a port of a wavelength selective switch is damaged and therefore induces a narrower bandwidth. In this case, reach/performance estimation can be performed and routing can direct proper transmissions (for instance, one may establish short/low-cascading or low-baudrate towards this switch and reroute other connections). So, at least some parameters and their associated elements can be also used as constraints in routing calculations.

This is notably the case of the trust coefficient. Indeed, transmission systems have inherently unallocated margins, because transponders have not enough granularities in datarate to achieve zero-margin at every connection (even in their best elastic configuration, transmissions will always overreach the demand for a certain amount). So, this fact can be used together with the trust coefficient, when performing the routing: for instance transmissions with relatively large values of over-performance (due to unallocated margins) can be assigned to links with low trust coefficient. This allows reducing extra/unallocated margins, and the concerned transmission link allows improving the knowledge on its parameter(s).

The invention offers several advantages, amongst which:

- it allows a non-intrusive parameter monitoring in the node receivers,
- it allows a complete knowledge of the whole network, which can be used notably to improve performance estimation and design, and to reduce margins related to parameter uncertainties,
- it allows obtaining current and historic statistical values of parameters that are useful for quickly detecting failure or degradation,
- it allows obtaining a new parameter: the trust coefficient that is useful for reducing extra-margin (notably during network design) and unallocated margins (notably during routing),
- it allows an overall increase of the network capacity and the network reliability while decreasing the network cost.

It should be appreciated by those skilled in the art that any block diagram herein represent conceptual views of illustrative circuitry or method step embodying the principles of the invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Method for optimizing an optical network (1) comprising a control plane (2) and nodes ($3_j$) coupled to said control plane (2) and therebetween by means of transmission links, wherein it comprises i) determining at least one parameter of end-to-end transmission links of said network (1), then providing each determined parameter to said control plane (2), ii) estimating parameters of unknown intermediate transmission links of said network (1) from said determined parameters, iii) producing at least one statistical value of each determined parameter and/or at least one statistical value of each estimated parameter and associating at least one trust coefficient for at least one of these parameters, and iv) analysing each produced statistical value, each associated trust coefficient and these determined or estimated parameters to perform at least one optimization of said network (1).

**2.** Method according to claim 1, wherein each network optimization is chosen from a group comprising a margin calculation, a transmission link design, a best routing and a failure detection.

**3.** Method according to one of claims 1 and 2, wherein each of said determined or estimated parameters is chosen from a group comprising an amplitude of a filtering transfer function, a phase of a filtering transfer function, an optical signal to noise ratio, a chromatic dispersion, a polarization dependent loss, a polarization mode dispersion and a noise factor.

**4.** Method according to one of claims 1 to 3, wherein, in the case where a statistical value of a parameter has been already produced for said parameter before it is determined or estimated once again, one updates said statistical value by using a last determination or estimation of its parameter.

**5.** Method according to one of claims 1 to 4, wherein said trust coefficient is a function of a last update time and/or current and historic statistical values and/or a confidence level/intervals.

**6.** Method according to one of claims 1 to 5, wherein one further associates a confidence level/interval and/or a last update time to at least one of said parameters.

**7.** Method according to one of claims 1 to 6, wherein each statistical value is chosen from a group comprising a mean value, a variance and a standard deviation.

**8.** Computer program product comprising a set of instructions arranged, when it is executed by processing means, for performing the method according to one of the preceding claims to optimize an optical network (1) comprising a control plane (2) and nodes ($3_j$) coupled to said control plane (2) and therebetween by means of transmission links.

**9.** Apparatus (4) for optimizing an optical network (1) comprising a control plane (2) and nodes ($3_j$) coupled to said control plane (2) and therebetween by means of transmission links, wherein it is arranged for i) determining at least one parameter of end-to-end transmission links of said network (1), then providing each determined parameter to said control plane (2), ii) estimating parameters of unknown intermediate transmission links of said network (1) from said determined parameters, iii) producing at least one statistical value of each determined parameter and/or at least one statistical value of each estimated parameter and associating at least one trust coefficient for at least one of these parameters, and iv) analysing each produced statistical value, each associated trust coefficient and these determined or estimated parameters to perform at least one optimization of said network (1).

FIG.1

FIG.2

| I/O | $3_1$ | $3_2$ | $3_3$ | $3_4$ |
|-----|-------|-------|-------|-------|
| $3_1$ | | $P_{12}$ | | |
| $3_2$ | | | | |
| $3_3$ | | | | |
| $3_4$ | | | | |

| Parameter | mean value | variance | confidence level/interval | last update | trust coefficient |
|-----------|------------|----------|---------------------------|-------------|-------------------|
| CD | | | | | |
| PMD | | | | | |
| PDL | | | | | |
| FTF | | | | | |
| NF | | | | | |
| OSNR | | | | | |
| Q-factor | | | | | |

FIG.3

FIG.4

Europäisches
Patentamt

European
Patent Office

Office européen
des brevets

# EUROPEAN SEARCH REPORT

Application Number

EP 15 30 5706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOREA A ET AL: "Importance of reliability when dimensioning an optical transparent network with physical impairments awareness", TRANSPARENT OPTICAL NETWORKS, 2009. ICTON '09. 11TH INTERNATIONAL CONFERENCE ON, IEEE, PISCATAWAY, NJ, USA, 28 June 2009 (2009-06-28), pages 1-4, XP031498687, ISBN: 978-1-4244-4825-8 * the whole document * | 1-9 | INV. H04L12/751 H04Q11/00 |
| A | SIRACUSA A FRANCESCON E SALVADORI CREATE-NET R J DURAN I DE MIGUEL R M LORENZO UNIVERSIDAD DE VALLADOLID D: "Framework for Cognitive Capable Optical Networks; draft-siracusa-nmrg-ccon-fwk-00.txt", FRAMEWORK FOR COGNITIVE CAPABLE OPTICAL NETWORKS; DRAFT-SIRACUSA-NMRG-CCON-FWK-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 4 November 2013 (2013-11-04), pages 1-24, XP015095984, [retrieved on 2013-11-04] * the whole document * | 1-9 | |

TECHNICAL FIELDS SEARCHED (IPC)

H04J
H04B
H04L
H04Q

-/--

The present search report has been drawn up for all claims

| Place of search | Date of completion of the search | Examiner |
|---|---|---|
| Munich | 29 October 2015 | Carballo da Costa, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

EP 15 30 5706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RYAN W THOMAS ET AL: "Cognitive networks: adaptation and learning to achieve end-to-end performance objectives", IEEE COMMUNICATIONS MAGAZINE, IEEE SERVICE CENTER, PISCATAWAY, US, vol. 44, no. 12, 1 December 2006 (2006-12-01), pages 51-57, XP011153049, ISSN: 0163-6804, DOI: 10.1109/MCOM.2006.273099 * the whole document * | 1-9 | |
| A | WO 2012/119364 A1 (HUAWEI TECH CO LTD [CN]; YE YABIN [DE]; WU TONG [CN]; ZHANG SEN [CN]) 13 September 2012 (2012-09-13) * page 1, line 8 - line 30 * * page 17, line 16 - page 36, line 31 * * claim 1 * * figures 1-6 * | 1-9 | |
| A | WO 2012/163418 A1 (ERICSSON TELEFON AB L M [SE]; BRUNO GIANMARCO [IT]; TARTAGLIA ANTONIO) 6 December 2012 (2012-12-06) * page 5, line 31 - page 14, line 21 * * figures 1,2,6 * | 1-9 | TECHNICAL FIELDS SEARCHED (IPC) |
| L | A Ai Giglio ET AL: "Cross-Layer, Dynamic Network Orchestration, Leveraging Software-Defined Optical Performance Monitors", 7 May 2015 (2015-05-07), pages 1-4, XP055224284, Retrieved from the Internet: URL:http://www.orchestraproject.eu/images/orchestra/publications/Fotonica-Orchestra_paper_v1.pdf [retrieved on 2015-10-28] * the whole document * | 1-9 | |

The present search report has been drawn up for all claims

| Place of search | Date of completion of the search | Examiner |
|---|---|---|
| Munich | 29 October 2015 | Carballo da Costa, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5706

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2015

| Patent document cited in search report | | Publication date | Patent family member(s) | | Publication date |
|---|---|---|---|---|---|
| WO 2012119364 | A1 | 13-09-2012 | CN | 102652406 A | 29-08-2012 |
| | | | EP | 2569879 A1 | 20-03-2013 |
| | | | US | 2013028597 A1 | 31-01-2013 |
| | | | WO | 2012119364 A1 | 13-09-2012 |
| WO 2012163418 | A1 | 06-12-2012 | NONE | | |

EPO FORM P0459

For more details about this annex : see Official Journal of the European Patent Office, No. 12/82